# EUROPÄISCHE PATENTANMELDUNG

(11) **EP 1 400 397 A2**
(43) Veröffentlichungstag der Anmeldung: **24.03.2004**
(21) Anmeldenummer: 03021044.7
(22) Anmeldetag: 17.09.2003
(51) Int. Cl.: B60N 2/16, B60N 2/22, B60N 2/42, B60N 2/48

(54) **Fahrzeugsitz**

(30) Priorität: 17.09.2002 DE 10243796
(71) Anmelder: Bertrandt Ingenieurbüro GmbH, 50769 Köln (DE)
(72) Erfinder: Kochem, Hans-Georg, 50739 Köln (DE); Schmidt, Frank, 51674 Wiehl (DE); Zimmer, Dirk, 53925 Kall (DE)
(74) Vertreter: Karrais, Martin

(57) **Zusammenfassung**

Die Erfindung betrifft einen Fahrzeugsitz mit einer höhenverstellbaren Kopfstütze, einer Rückenlehne, die ein den Beckenbereich einer sitzenden Person abstützendes Beckenstützteil aufweist, und mit einem Sitzteil. Um den Fahrzeugsitz derart weiterzubilden, daß er eine verbesserte Anpassung an die jeweils Platz nehmende Person ermöglicht, wird erfindungsgemäß vorgeschlagen, daß die Kopfstütze und das Sitzteil bezogen auf das Beckenstützteil höhenverstellbar gehalten sind.

## Beschreibung

Die Erfindung betrifft einen Fahrzeugsitz mit einer höhenverstellbaren Kopfstütze, einer Rückenlehne, die ein den Beckenbereich einer sitzenden Person abstützendes Beckenstützteil aufweist, und mit einem Sitzteil.

Die ergonomisch günstige Ausgestaltung eines Fahrzeugsitzes gewinnt zunehmend an Bedeutung, insbesondere mit Blick auf eine Verbesserung des Insassenschutzes eines Fahrzeugs, um Verletzungen der Insassen vor allem bei einem Heckaufprall möglichst gering zu halten. Zur Vermeidung von Halswirbelverletzungen ist es in diesem Zusammenhang seit langem bekannt, die Kopfstütze des Fahrzeugsitzes höhenverstellbar auszugestalten. Die restliche Kontur des Fahrzeugsitzes ist allerdings meist auf einen bestimmten Bevölkerungsanteil optimiert, dessen Proportionen in einem Normbereich liegen. Nimmt eine verhältnismäßig kleine oder eine verhältnismäßig große Person auf dem Fahrzeugsitz Platz, so weicht deren Kontur von der Kontur des Fahrzeugsitzes zum Teil erheblich ab, so daß im Falle eines Aufpralls die Stützfunktion des Fahrzeugsitzes nicht in allen Fällen gewährleistet ist.

Aufgabe der vorliegenden Erfindung ist es, einen Fahrzeugsitz der eingangs genannten Art derart weiterzubilden, daß er eine verbesserte Anpassung an die jeweils Platz nehmende Person ermöglicht.

Diese Aufgabe wird bei einem Fahrzeugsitz der gattungsgemäßen Art erfindungsgemäß dadurch gelöst, daß die Kopfstütze und das Sitzteil bezogen auf das Beckenstützteil höhenverstellbar gehalten sind. Es hat sich gezeigt, daß durch eine derartige Ausgestaltung des Fahrzeugsitzes eine vom Insassen auf einfache Weise handhabbare Anpassung vorgenommen werden kann, so daß ein möglichst konstanter Konturabstand zwischen dem jeweiligen Passagier und der Fahrzeugsitzkontur erzielt wird. Dadurch läßt sich im Falle eines Aufpralls eine vollflächige Anlage des Insassen an den Fahrzeugsitz erzielen, so daß die Gefahr einer Verletzung erheblich reduziert wird.

Erfindungsgemäß können sowohl die Kopfstütze als auch das Sitzteil relativ zum Beckenstützteil des Fahrzeugsitzes in vertikaler Richtung verstellt werden. Dies hat auch den Vorteil, daß eine ergonomisch günstige Beckenposition provoziert werden kann, so daß insbesondere eine Belastung im Bereich der Lendenwirbel eher gering gehalten werden kann.

Von besonderem Vorteil ist es, wenn die Rückenlehne ein den Schulterbereich einer sitzenden Person abstützendes Schulterstützteil aufweist, das relativ zum Beckenstützteil höhenverstellbar gehalten ist. Bei einer derartigen Ausgestaltung ist die Rückenlehne zumindest zweiteilig ausgestaltet und umfaßt in ihrem oberen Bereich ein Schulterstützteil und in ihrem unteren Bereich ein Bekkenstützteil. Das Schulterstützteil kann hierbei an den Oberkörper des Insassen angepaßt werden, so daß der Insasse im Falle eines Heckaufpralls insbesondere im Schulter- und Nackenbereich zuverlässig abgestützt werden kann. Zur Anpassung des Fahrzeugsitzes an die Größe des Insassen ist es günstig, wenn zumindest das Schulterstützteil höhenverstellbar ist, während das Bekkenstützteil unbeweglich gehalten ist. Besonders vorteilhaft ist es, wenn sowohl das Schulterstützteil als auch das Beckenstützteil höhenverstellbar sind.

Von besonderem Vorteil ist es, wenn die Kopfstütze am Schulterstützteil gehalten ist. Vorzugsweise sind die Kopfstütze und das Schulterstützteil starr miteinander verbunden. Der Fahrzeugsitz kann bei einer derartigen Ausführungsform als sogenannter Integralsitz ausgebildet sein, bei dem die Kopfstütze und das Schulterstützteil der Rückenlehne einstückig miteinander verbunden sind und eine kombinierte Kopf-Nacken-Schulter-Stütze ausbilden, die höhenverstellbar gehalten ist, so wie auch das Sitzelement in seiner Höhe bezogen auf das Beckenstützteil verstellt werden kann.

Die Höhenverstellung der Kopfstütze kann unabhängig von einer Höhenverstellung des Sitzteils erfolgen. Zur Vereinfachung der Anpassung des Fahrzeugsitzes an die jeweils Platz nehmende Person ist es von Vorteil, wenn der Fahrzeugsitz eine Verstelleinrichtung umfaßt zum gleichzeitigen Verstellen des Sitzteils und der Kopfstütze. Günstig ist eine Ausgestaltung, bei der die Verstellung der Kopfstütze, vorzugsweise über die Verstelleinrichtung, mit der Verstellung des Sitzteils gekoppelt ist.

Die Betätigung der Verstelleinrichtung kann manuell erfolgen, es kann jedoch auch eine elektromechanische, pneumatische oder hydraulische Betätigung zum Einsatz kommen. Insbesondere kann vorgesehen sein, daß die Verstelleinrichtung mit einer Steuereinheit gekoppelt ist, der eine Sensorik zur Erfassung der Oberkörperlänge der auf dem Fahrzeugsitz Platz nehmenden Person zugeordnet ist. Dies gibt die Möglichkeit, die Oberkörperlänge selbsttätig zu erfassen und die Verstelleinrichtung entsprechend zu betätigen zur möglichst optimalen Größenanpassung des Sitzes.

Bei einer bevorzugten Ausführungsform des erfindungsgemäßen Fahrzeugsitzes ist vorgesehen, daß die Verstellungen der Kopfstütze und des Sitzteils gegenläufig gekoppelt sind. Bei einer derartigen Ausgestaltung hat eine Erhöhung der Position der Kopfstütze gleichzeitig eine Absenkung des Sitzteils zur Folge und umgekehrt führt eine Absenkung der Kopfstütze zu einer Erhöhung des Sitzteils bezogen auf das Beckenstützteil. Dies gibt einem Insassen die Möglichkeit, mit einer einzigen Verstellbewegung den Fahrzeugsitz an die Größe seines Oberkörpers anzupassen.

Von besonderem Vorteil ist es, wenn die Kopfstütze und das Sitzteil um unterschiedliche Verstellwege verstellbar sind. Dies ermöglicht es beispielsweise, das Sitzteil um einen verhältnismäßig geringen Verstellweg zu verstellen, während die Kopfstütze um einen beträchtlich längeren Verstellweg in der Höhe verstellbar ist.

Die kombinierte Verstellung der Kopfstütze und des Sitzteils kann über Getriebemittel erfolgen.

Besonders günstig ist es, wenn der Verstellweg der Kopfstütze größer ist als der Verstellweg des Sitzelements. Vorzugsweise ist der Verstellweg der Kopfstütze mindestens doppelt so groß wie der Verstellweg des Sitzteils. Ein Verhältnis von etwa 1:2 für die Verstellwege des Sitzteils und der Kopfstütze hat sich als demographisch besonders günstig erwiesen.

Von besonderem Vorteil ist es, wenn die Kopfstütze, vorzugsweise in Kombination mit dem Schulterstützteil der Rückenlehne, nicht nur in der Höhe verstellbar, sondern bei einer Erhöhung ihrer Lage gleichzeitig auch nach vorne in Richtung auf den Nackenbereich der sitzenden Person verschwenkbar sind. So kann vorgesehen sein, daß sie um eine horizontale Schwenkachse verschwenkbar gehalten sind. Dadurch kann im Kopf-, Schulter- und Nackenbereich ein möglichst geringer Abstand zum Insassen erzielt und damit die Gefahr einer Verletzung im Falle eines Heckaufpralls erheblich vermindert werden.

Bei einer besonders bevorzugten Ausführungsform des erfindungsgemäßen Fahrzeugsitzes weist dieser zwei Seitenholme auf, an denen das Schulterstützteil und das Sitzteil höhenverstellbar gehalten sind und an denen das Beckenstützteil unbeweglich gehalten ist. Hierbei ist es günstig, wenn die Kopfstütze am Schulterstützteil gehalten ist und wenn das Schulterstützteil verschiebbar an den Seitenholmen gelagert ist. Zur Lagerung kommt vorzugsweise eine Kulissenführung zum Einsatz, die auf konstruktiv einfache Weise eine Höhenverstellung und vorzugsweise gleichzeitig auch eine Verschwenkbewegung des Schulterstützteils ermöglicht.

Das Sitzteil ist bei einer bevorzugten Ausführungsform verschwenkbar an den Seitenholmen gelagert. Vorzugsweise erfolgt die Lagerung des Sitzteils über Hebel, die einerseits am Sitzteil und andererseits jeweils an einem der Seitenholme des Fahrzeugsitzes angelenkt sind.

Zur Kopplung der Verstellbewegung der Kopfstütze mit einer Verstellbewegung des Sitzteils ist es günstig, wenn die Kopfstütze am Schulterstützteil gehalten ist, welches über einen Schwenkhebel mit dem Sitzteil mechanisch gekoppelt ist.

Die nachfolgende Beschreibung einer bevorzugten Ausführungsform der Erfindung dient im Zusammenhang mit der Zeichnung der näheren Erläuterung. Es zeigen:
- Figur 1:: eine schematische Seitenansicht eines erfindungsgemäßen Fahrzeugsitzes mit einer Kopfstütze in unterster Höhenstellung und einem Sitzteil in oberster Höhenstellung;
- Figur 2:: eine schematische Seitenansicht gemäß Figur 1, wobei sich die Kopfstütze in oberster Höhenstellung und das Sitzteil in unterster Höhenstellung befindet und
- Figur 3:: eine schematische Vorderansicht des Fahrzeugsitzes in der in Figur 1 dargestellten Höhenstellung der Kopfstütze und des Sitzteils.

In der Zeichnung ist in stark schematisierter Darstellung ein insgesamt mit dem Bezugszeichen 10 belegter Fahrzeugsitz illustriert. Zur Erzielung einer besseren Übersicht ist der Fahrzeugsitz 10 nur mit unvollständiger Polsterung dargestellt. Derartige Polsterungen sind dem Fachmann in vielfältiger Ausgestaltung bekannt und werden deshalb vorliegend nicht näher erläutert.

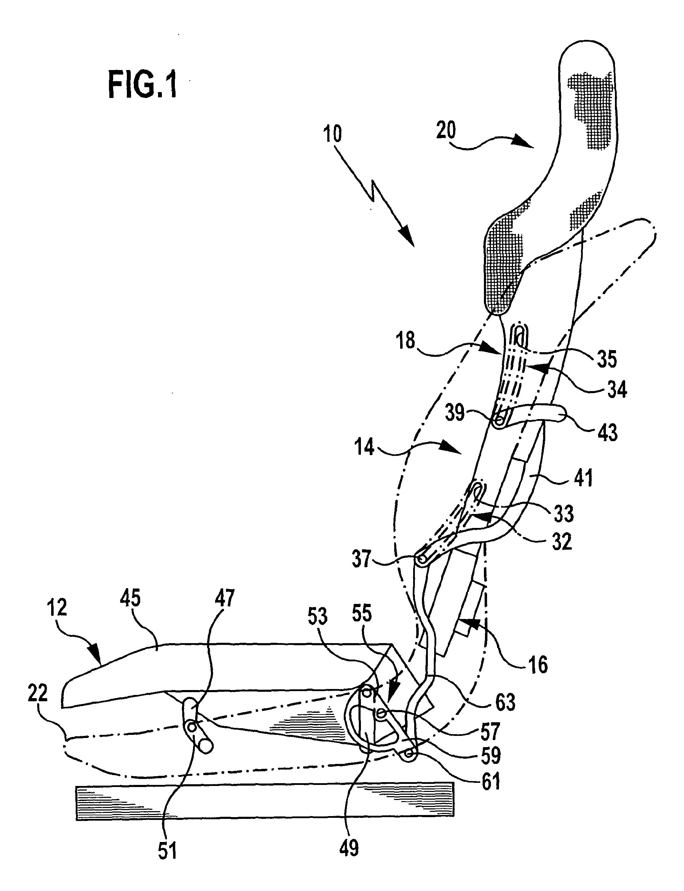

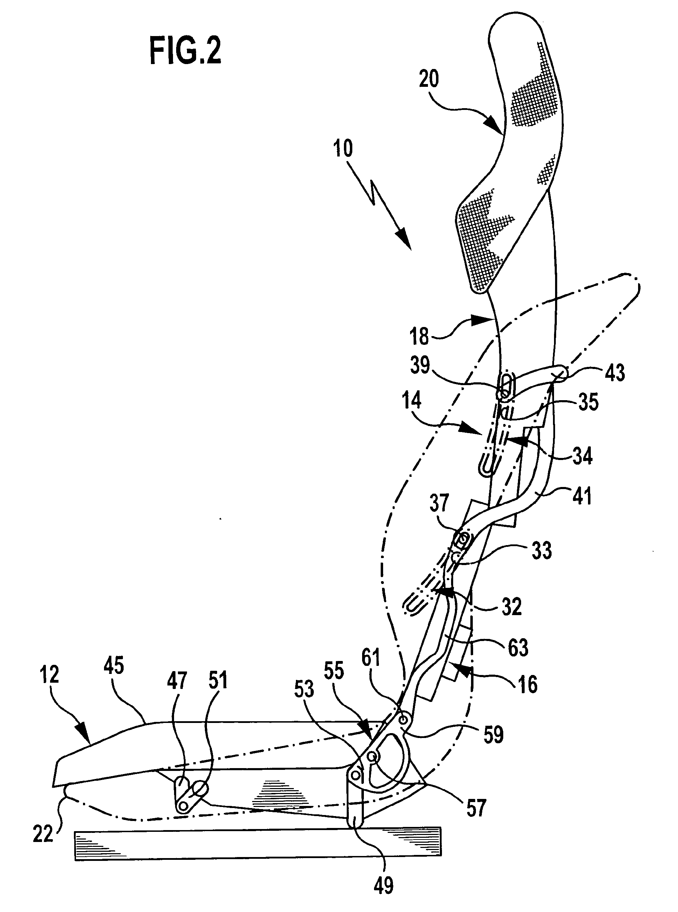

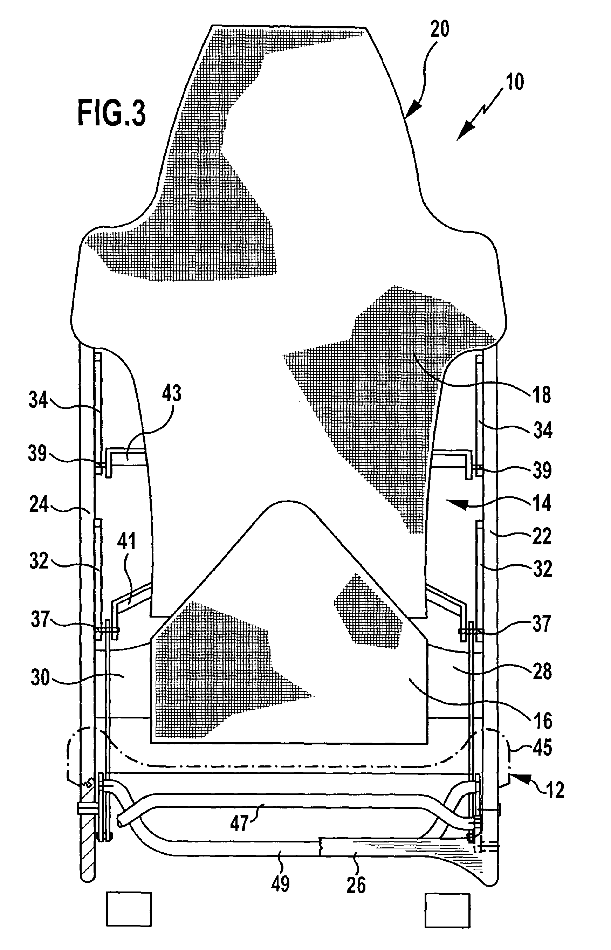

Der Fahrzeugsitz 10 umfaßt ein in Figur 3 strichpunktiert dargestelltes, wannenförmiges Sitzteil 12, eine zweiteilige, in durchgezogener Linie dargestellte Rückenlehne 14 mit einem Beckenstützteil 16 und einem Schulterstützteil 18 sowie eine einstückig mit dem Schulterstützteil 18 verbundene Kopfstütze 20. Wie insbesondere aus den Figuren 1 und 2 deutlich wird, sind die Konturen der Rückenlehne 14, insbesondere des Schulterstützteils 18, und der Kopfstütze 20 an die Kopf- und Nackenkontur der auf dem Fahrzeugsitz 10 Platz nehmenden Person angepaßt, so daß sich im Falle eines Heckaufpralls eine möglichst vollflächige Anlage der Person an den Fahrzeugsitz 10 ergibt.

Der Fahrzeugsitz 10 umfaßt außerdem zwei parallel zueinander ausgerichtete, starre Seitenholme 22 und 24, die in den Figuren 1 und 2 strichpunktiert illustriert sind und die über einen in Figur 3 dargestellten unteren Querholm 26 sowie einen in der Zeichnung nicht dargestellten, am oberen Ende der Seitenholme 22 und 24 parallel zum unteren Querholm 26 verlaufenden oberen Querholm starr miteinander verbunden sind. Die Seitenholme 22, 24 sowie der untere Querholm 26 und der obere Querholm bilden einen starren Tragrahmen, an dem das Sitzteil 12 und die Rückenlehne 14 mit integrierter Kopfstütze 20 gehalten sind. Das Beckenstützteil 16 der Rückenlehne 14 ist über seitliche Tragarme 28, 30 starr mit den Seitenholmen 22 und 24 verbunden, während das Schulterstützteil 18 sowie das Sitzteil 12 höhenverstellbar an den Seitenholmen 22, 24 gelagert sind.

Das Schulterstützteil 18 kann ebenso wie das Sitzteil 12 in vertikaler Richtung kontinuierlich zwischen einer untersten und einer obersten Stellung verstellt werden. Wie nachfolgend beschrieben, sind hierbei die Verstellbewegungen des Schulterstützteils 18 und des Sitzteils 12 gegenläufig gekoppelt, so daß das Sitzteil seine oberste Höhenstellung einnimmt, wenn das Schulterstützteil mit der integrierten Kopfstütze 20 seine unterste Höhenposition einnimmt, wie dies in Figur 1 dargestellt ist. Wird das Schulterstützteil 18 in seine oberste Höhenstellung verstellt, wie dies in Figur 2 dargestellt ist, so nimmt das Sitzteil 12 zwangsweise seine unterste Höhenstellung ein. Der Verstellweg des Schulterstützteils 18 in vertikaler Richtung ist ungefähr doppelt so groß wie der vertikale Verstellweg des Sitzteils 12, vorzugsweise betragen die maximalen Verstellwege für das Schulterstützteil 12 etwa 100 mm und für das Sitzteil etwa 50 mm.

Zur höhenverstellbaren Lagerung des Schulterstützteils 18 an den Seitenholmen 22 und 24 weisen die beiden Seitenholme auf ihren einander zugewandten Innenseiten jeweils zwei in vertikalem Abstand zueinander angeordnete Kulissenplatten 32, 34 auf, die jeweils eine bogenförmig verlaufende Gleitführung 33 bzw. 35 aufweisen, in der jeweils ein Kulissenstein 37 bzw. 39 verschiebbar gehalten ist.

Zwischen den beiden Seitenholmen 22 und 24 nehmen die an den Innenseiten der Seitenholme 22, 24 angeordneten, einander zugewandten Kulissensteine 37 ebenso wie die Kulissensteine 39 jeweils einen unteren bzw. oberen Haltebügel 41 bzw. 43 zwischen sich auf, die endseitig an die Kulissensteine 37 bzw. an die Kulissensteine 39 angelenkt sind und eine Halterung ausbilden für das Schulterstützteil 18, das mittels an sich bekannter und deshalb in der Zeichnung nicht dargestellter Befestigungsmittel an den Haltebügeln 39 und 43 festgelegt ist.

Das Sitzteil 12 umfaßt eine ein Sitzpolster aufnehmende Sitzwanne 45, die auf endseitig abgekröpften vorderen und hinteren Stützstangen 47 bzw. 49 aufsitzt. Die Stützstangen 47 und 49 sind endseitig jeweils gelenkig mit den Seitenholmen 22 und 24 verbunden. Hierzu ist an den Seitenholmen 22 und 24 in einem vorderen, der Rückenlehne 14 beabstandeten Bereich jeweils ein vorderer Gelenkarm 51 angelenkt, der gelenkig mit den abgekröpften Endbereichen der vorderen Stützstange 47 verbunden ist, und die abgekröpften Endbereiche der hinteren Stützstange 49 sind über an den Seitenholmen 22 und 24 angelenkte hintere Gelenkarme 53 gelenkig mit den beiden Seitenholmen 22 und 24 verbunden. Die hinteren Gelenkarme 53 werden jeweils von einem kürzeren Hebelarm eines zweiarmigen Schwenkhebels 55 ausgebildet, der um eine senkrecht zu den Seitenholmen 22 und 24 ausgerichtete Schwenkachse 57 verschwenkbar an den Seitenholmen 22 bzw. 24 gelagert ist und dessen längerer Hebelarm 59 über ein Gelenk 61 mit einer Kopplungsstange 63 verbunden ist, deren dem längeren Hebelarm 59 abgewandtes Ende am Kulissenstein 37 angelenkt ist. Über die Kopplungsstangen 63 und die Schwenkhebel 55 ist das Schulterstützteil 18 mit dem Sitzteil 12 gekoppelt, so daß eine Verstellung des Schulterstützteils zwangsweise auch eine Verstellung des Sitzteils - allerdings in die entgegengesetzte Richtung - zur Folge hat. Wird das Schulterstützteil 18 mit integrierter Kopfstütze 20 in die dem Sitzteil 12 abgewandte Richtung nach oben verschoben, so hat dies eine Verschwenkbewegung des Schwenkhebels 55 um die Schwenkachse 57 zur Folge, so daß das Sitzteil 12 nach unten abgesenkt wird. Umgekehrt führt ein Anheben des Sitzteils 12 aufgrund der damit verbundenen Verschwenkbewegung des Schwenkhebels 55 zu einer Absenkbewegung des Schulterstützteils 18 einschließlich der daran festgelegten Kopfstütze 20. Die Kopplung der Verstellbewegungen erfolgt hierbei dergestalt, daß eine Anhebung oder Absenkung des Sitzteils um einen bestimmten Verstellweg eine doppelt so große Absenkung bzw. Anhebung des Schulterstützteils 18 zur Folge hat. Ein derartiges Übersetzungsverhältnis, nämlich ein Verhältnis der Verstellwege von 1:2, hat sich als demographisch optimal erwiesen.

## Patentansprüche

1. Fahrzeugsitz mit einer höhenverstellbaren Kopfstütze, einer Rückenlehne, die ein den Beckenbereich einer sitzenden Person abstützendes Bekkenstützteil aufweist, und mit einem Sitzteil, **dadurch gekennzeichnet, daß** die Kopfstütze (20) und das Sitzteil (12) bezogen auf das Beckenstützteil (16) höhenverstellbar gehalten sind.

2. Fahrzeugsitz nach Anspruch 1, **dadurch gekennzeichnet, daß** die Rükkenlehne (14) ein den Schulterbereich einer sitzenden Person abstützendes Schulterstützteil (18) umfaßt, das relativ zum Beckenstützteil (16) höhenverstellbar gehalten ist.

3. Fahrzeugsitz nach Anspruch 2, **dadurch gekennzeichnet, daß** die Kopfstütze (20) am Schulterstützteil (18) gehalten ist.

4. Fahrzeugsitz nach Anspruch 3, **dadurch gekennzeichnet, daß** die Kopfstütze (20) und das Schulterstützteil (18) starr miteinander verbunden sind.

5. Fahrzeugsitz nach einem der voranstehenden Ansprüche, **dadurch gekennzeichnet, daß** der Fahrzeugsitz (10) eine Verstelleinrichtung umfaßt zum gleichzeitigen Verstellen des Sitzteils (12) und der Kopfstütze (20).

6. Fahrzeugsitz nach einem der voranstehenden Ansprüche, **dadurch gekennzeichnet, daß** die Verstellung der Kopfstütze (20) mit der Verstellung des Sitzteils (12) gekoppelt ist.

7. Fahrzeugsitz nach Anspruch 6, **dadurch gekennzeichnet, daß** die Verstellungen der Kopfstütze (20) und des Sitzteils (12) gegenläufig gekoppelt sind.

8. Fahrzeugsitz nach einem der voranstehenden Ansprüche, **dadurch gekennzeichnet, daß** die Kopfstütze (20) und das Sitzelement (12) um unterschiedliche Verstellwege verstellbar sind.

9. Fahrzeugsitz nach Anspruch 8, **dadurch gekennzeichnet, daß** der Verstellweg der Kopfstütze (20) größer ist als der Verstellweg des Sitzelements (12).

10. Fahrzeugsitz nach Anspruch 8 oder 9, **dadurch gekennzeichnet, daß** der Verstellweg der Kopfstütze (20) ungefähr doppelt so groß ist wie der Verstellweg des Sitzelements (12).

11. Fahrzeugsitz nach einem der Ansprüche 2 bis 10, **dadurch gekennzeichnet, daß** die Kopfstütze (20) und das Schulterstützteil (18) bei einer Erhöhung ihrer Lage gleichzeitig auch nach vorne in Richtung auf den Nakkenbereich der sitzenden Person verschwenkbar sind.

12. Fahrzeugsitz nach einem der voranstehenden Ansprüche, **dadurch gekennzeichnet, daß** der Fahrzeugsitz (10) zwei Seitenholme (22, 24) aufweist, an denen das Schulterstützteil (18) und das Sitzteil (12) höhenverstellbar gehalten sind und an denen das Beckenstützteil (16) unbeweglich gehalten ist.

13. Fahrzeugsitz nach Anspruch 12, **dadurch gekennzeichnet, daß** die Kopfstütze (20) am Schulterstützteil (18) gehalten ist und daß das Schulterstützteil (18) verschiebbar an den Seitenholmen (22, 24) gelagert ist.

14. Fahrzeugsitz nach Anspruch 12 oder 13, **dadurch gekennzeichnet, daß** das Schulterstützteil (18) über mindestens eine Kulissenführung (32, 34) an den Seitenholmen gelagert ist.

15. Fahrzeugsitz nach Anspruch 12, 13 oder 14, **dadurch gekennzeichnet, daß** das Sitzteil (12) verschwenkbar an den Seitenholmen (22, 24) gelagert ist.

16. Fahrzeugsitz nach einem der voranstehenden Ansprüche, **dadurch gekennzeichnet, daß** die Kopfstütze (20) am Schulterstützteil (18) gehalten ist, das über einen Schwenkhebel (55) mit dem Sitzteil (12) mechanisch gekoppelt ist.
